# EUROPÄISCHE PATENTSCHRIFT

(11) **EP 2 423 283 B1**
(45) Veröffentlichungstag und Bekanntmachung des Hinweises auf die Patenterteilung: **17.04.2013**
(21) Anmeldenummer: 10173950.6
(22) Anmeldetag: 25.08.2010
(51) Int. Cl.: C09J 5/00, B65D 83/00, C09J 175/04, C08L 75/04, B32B 37/00

(54) **Verwendung von 2K-Klebstoff in Kartusche als Kaschierklebstoff**
Use of two-component adhesive in cartridge as laminating adhesive
Utilisation d'adhésif bi-composant en cartouche comme adhésif de laminage

(43) Veröffentlichungstag der Anmeldung: 29.02.2012
(73) Patentinhaber: Henkel AG & Co. KGaA, 40589 Düsseldorf (DE)
(72) Erfinder: Gierlings, Michael, 40723, Hilden (DE)

(56) Entgegenhaltungen:
- EP-A1- 1 945 730
- EP-A1- 2 049 612
- DE-A1- 19 956 835
- US-A1- 2007 289 996

## Beschreibung

Die Erfindung betrifft die Verwendung von reaktiven Klebstoffen auf Basis von Polyurethanen, die als vernetzbare 2-Komponenten-Klebstoffe in Kartuschen bereitgestellt, gemischt und als Kaschierklebstoffe eingesetzt werden.

Klebstoffe zum Verkleben von flexiblen Folien werden in der Industrie weit eingesetzt. Ein besonderes Anwendungsfeld sind flexible Mehrschichtfolien, die danach zu Verpackungszwecken eingesetzt werden können, beispielsweise für die Verpackung von Lebensmitteln, Arzneimitteln oder anderen Gegenständen. Dabei sollen diese Klebstoffe in dünner Schicht aufgetragen werden, so dass eine kostengünstige Applikation möglich ist. Weiterhin werden an die Zusammensetzung der Klebstoffe verschiedene Anforderungen gestellt, beispielsweise sollen sie auf unterschiedlichen Substraten eine gute und stabile Haftung aufweisen. Dabei kann die Zusammensetzung des Klebstoffes auf die zu verklebenden Substrate angepasst werden. Weiterhin ist es aus kommerziellen Gründen notwendig, dass diese Verklebungen im industriellen Maßstab rasch durchgeführt werden können.

Deswegen hat es sich als zweckmäßig erwiesen, für viele Anwendungszwecke solche Folien mit reaktiven Klebstoffen zu verkleben. Dabei wird eine erste Anfangshaftung erzeugt, die dauerhafte Verklebung wird dann durch die chemische Reaktion der Vernetzung erzielt. Insbesondere geeignet sind 2-Komponenten-Klebstoffe, die erst unmittelbar vor der Applikation gemischt werden, dann im Rahmen der so genannten Topfzeit aufgetragen und verklebt werden, und danach vernetzen.

Häufig hat es sich als günstig erwiesen Klebstoffe einzusetzen, die bei Applikationstemperatur eine niedrige Viskosität aufweisen. Damit ist es möglich, eine dünne Schichtstärke zu erzielen. Lösemittelhaltige Klebstoffe können in ihrer Viskosität den Applikationsgeräten angepasst werden. Die enthaltenden Lösemittel führen jedoch zu einer Belastung von Arbeitsatmosphäre und Umwelt, sie benötigen zusätzliche technische Vorrichtungen wie eine Trocknungseinrichtung.

2K-Klebstoffe geben keine flüchtigen Substanzen ab. Diese haben aber verschiedene Nachteile. Es ist einerseits bekannt, dass durch die begrenzte Topfzeit eine Verunreinigung der Applikationsgerätschaften auftritt. Das kann zu äußeren Verunreinigungen der Apparatur führen. Es ist häufig festzustellen, dass auch die Funktionsweise der Applikationsgeräte gestört wird. Beispielsweise können Schläuche, Düsen, Mischgeräte verstopfen.

Weiterhin ist es für 2-K-Klebstoffe wesentlich, dass diese in einem vorgegebenen Mischungsverhältnis gemischt werden. Nur in diesem Falle ist sichergestellt, dass die zu erwartende Vernetzungsdichte des vernetzten Klebstoffes, wie unter optimalen Bedingungen getestet, eintritt. Wird eine Komponente zu niedrig dosiert, ist häufig nur eine schlechte Verklebung zu beobachten. Das führt zu einer Schwächung des Substratverbundes.

Die US 2007/0289996 beschreibt 2-Komponenten-Klebstoffe und Anwendungsgeräte dafür. Es handelt sich dabei um ein Gerät, das zwei Kartuschen parallel mit einer Auspressvorrichtung entleeren kann, wobei diese Entleerung durch einen gemeinsamen Applikationskanal geführt wird. Die dabei entstehende Klebstoffmischung wird in Form eines Stranges ausgebracht.

Die DE 199 56 835 beschreibt ein Verfahren zum Verkleben von Dichtbahnen. Dabei werden die Dichtbahnen am Rand mit einem niedrigviskosen Klebstoff versehen, wobei dieser Klebstoff in eine Gewebe- oder Vliesschicht eindringen soll. Zwei am Rand überlappende Bahnen werden gemäß Figur 1 dieser Anmeldung verklebt.

Ein weiterer Nachteil solcher nicht vorschriftsmäßig vernetzten Klebstoffe besteht darin, dass diese dann im Allgemeinen auch niedermolekulare reaktive Bestandteile enthalten. Diese können bei einer Lagerung ggf. durch die Klebstoffschicht und durch die Folie migrieren. Dabei können sie das zu verpackende Gut verunreinigen, dabei sind Geschmacksveränderungen oder auch Gesundheitsschädigungen möglich. Deswegen sollen solche nicht ordnungsgemäß vernetzte 2-K-Klebstoffe vermieden werden.

Apparaturen zum Mischung und Bereitstellen von 2-K-Klebstoffen sind bekannt. Dabei gibt es großtechnische Vorrichtungen, die über unterschiedliche Vorratstanks verfügen, die danach über Pumpen und Mischvorrichtungen gemischt werden und anschließend appliziert werden. Das erfordert einen hohen technischen Aufwand, weiterhin darf das Bedienungspersonal keine Fehler bei den Volumen-oder Gewichtsmesseinrichtungen zum Mischen verursachen.

Außerdem müssen Vorratsgefäße, Pumpen, Schläuche oder Mischgefäße gereinigt werden. Insbesondere bei mit Feuchtigkeit reaktiven Systemen können sich sonst dauerhaft Ablagerungen auf den Maschinenteilen bilden, die eine Benutzung und ein Einhalten der vorgegebenen Mischungsverhältnisse behindern. Ebenso ist eine längere Bevorratung von angebrochenen Transportcontainern der einzelnen Komponenten problematisch.

Es ist bekannt, 2-Komponenten-Klebstoffe im Do-it-yourself-Bereich in Form von Kartuschen einzusetzen. Dabei sind verschiedene Kartuschenformen bekannt. Ein Nachteil solcher Kartuschen-Applikationen liegt darin, dass üblicherweise bei den bekannten Einsatzzwecken eine größere Menge des gemischten Klebstoffes hergestellt und aufgetragen wird. Das geschieht beispielsweise in Form von Klebstoffraupen, einzelnen Klebstoffpunkten oder anderen Mustern. Für eine Applikation auf Flächen in dünner Schicht, wie Foliensubstrate, sind diese nicht geeignet. Ein einfaches Andrücken der Substrate direkt aneinander oder über Druckrollen führt üblicherweise nicht zu einer geeigneten Ausbildung eines homogenen, dünnen Klebstofffilms.

Aus dem Stand der Technik ergibt sich die Aufgabe, dass für eine Applikation von reaktiven 2-Komponenten-Klebstoffen der Klebstoff in einer Form bereitgestellt wird, der eine Verunreinigung der Klebstoffversorgung vermindert. Weiterhin sollen Fehler bei der Zusammensetzung der Klebstoffmischung verhindert werden, so dass eine gute Verklebung unter vollständigem Vernetzen der Klebstoffkomponenten erhalten wird. Weiterhin soll eine einfache Handhabung dieser Klebstoff-komponenten ermöglicht werden. Dabei soll der Klebstoff zum Verkleben von breiten flexiblen Flächen geeignet sein.

Die Aufgabe wird gelöst durch die Verwendung von 2K-Polyurethan- Klebstoffen als Kaschierklebstoff zum flächigen Verkleben von flexiblen Foliensubstraten zu Mehrschichtfolien mit einer Applikationsvorrichtung für Kaschierklebstoffe ausgestaltet zum Rakelauftrag, Druckauftrag, Schlitzdüsenauftrag oder Walzenauftrag, wobei der Klebstoff in getrennten Vorratsbehältern als Kartuschen verpackt bereitgestellt wird, wobei die Kartuschen ausgebildet sind mit einer beweglichen Bodenplatte und einer Austrittsöffnung an der entgegengesetzten Seite.

Die Erfindung beschreibt weiterhin eine Verpackungseinheit (Kit) bestehend aus einem 2K-Klebstoff abgefüllt in zwei separaten Kartuscheneinheiten, wobei dieser Kit in einer Vorrichtung zum Auftragen von Klebstoffen auf folienförmige Substrate eingesetzt wird. Die Erfindung betrifft weiterhin ein Verfahren zum Verkleben von folienförmigen Substraten.

Als Substrate zum Herstellen von Mehrschichtfolien gemäß der Erfindung können die bekannten flexiblen Folien eingesetzt werden. Dabei können auch andere flache Substrate, wie Papier oder Karton zusätzlich verklebt werden. Es handelt sich dabei beispielsweise um Substrate aus thermoplastischen Kunststoffen in Folienform, beispielsweise Polyolefine, wie Polyethylen (PE) oder Polypropylen (PP, CPP, OPP), Polyvinylchlorid (PVC), Polystyrol (PS), Polyestern, wie PET, Polyamid, natürliche Polymere, wie Cellophan oder Papier. Dabei können die Folienmaterialen auch modifiziert sein, z.B. durch Modifizieren der Polymere mit funktionellen Gruppen, oder es können zusätzliche Komponenten, beispielsweise Pigmente, Farbstoffe, in der Folie enthalten sein. Es kann sich um gefärbte, bedruckte, farblose oder transparente Folien handeln. Diese können auch mit anderen Substraten wie Papier, Karton oder Metallfolien verklebt werden. Es werden dabei flexible Mehrschichtfolien gebildet, die durch eine Klebstoffschicht miteinander verklebt sind.

Ein erfindungsgemäß geeigneter Klebstoff ist ein 2-Komponenten-Klebstoff, der aus zwei unterschiedlichen Komponenten besteht, die miteinander zu einem vernetzten Klebstofffilm abreagieren können. Insbesondere handelt es sich dabei um 2K-Polyurethan-Klebstoffe, die über NCO-Gruppen und azide H-Gruppen-haltige Bestandteile vernetzen. Beispiele dafür enthalten als Komponente A die bekannten NCO-Gruppen-haltigen Prepolymere oder Polyisocyanate, als Komponente B können die bekannten OH, NH, SH, COOH-Gruppen-haltigen Oligomere oder Polymere, die mit den NCO-Gruppen der anderen Komponente reagieren können, eingesetzt werden. Um ein Netzwerk zu erhalten ist es zweckmäßig, wenn mindestens zwei NCO-Gruppen und mindestens zwei insbesondere OH-Gruppen an den vernetzenden Bestandteilen enthalten sind. Weiterhin können die an sich bekannten Zusatzstoffe in dem Klebstoff enthalten sein. Es handelt sich dabei um solche Bestandteile, mit der bestimmte Eigenschaften des Klebstoffes eingestellt und beeinflusst werden können.

Beispielsweise wird als Komponente A ein mindestens zwei Isocyanatgruppen tragendes PU-Prepolymer oder ein Gemisch solcher PU-Prepolymere eingesetzt, das beispielsweise durch Umsetzung einer Polyolkomponente mit einem mindestens difunktionellen Isocyanat im stöchiometrischen Überschuss erhältlich ist.

PU-Prepolymere im Sinne der vorliegenden Erfindung sind Umsetzungsprodukte von OH-Gruppen oder NH-Gruppen-tragenden Verbindungen mit einem Überschuss von Polyisocyanaten. Es handelt sich dabei um die für Klebstoffanwendung bekannten Polyole oder entsprechende Verbindungen mit sekundären und/oder primären Aminogruppen. Es sind OH-haltige Ausgangsverbindungen bevorzugt. Insbesondere geeignet zur Synthese dieser Prepolymere sind Polyole mit einem Molekulargewicht bis zu 20000 g/mol, insbesondere von 200 bis zu 10000 g/mol (zahlenmittleres Molekulargewicht, M_{N}, wie durch GPC bestimmbar). Es kann sich dabei beispielsweise um Polyole auf Basis von Polyethern, Polyestern, Polyolefinen, Polyacrylaten, Alkylenpolyolen handeln. In einer anderen Ausführungsform werden solche Verbindungen mit NH-Gruppen eingesetzt.

Die Polyolkomponente kann dabei niedermolekular sein, beispielsweise von ca. 60 g/mol bis 1500 g/mol, es können jedoch auch höher molekulare Polymere umgesetzt werden, beispielsweise solche mit einem Molekulargewicht von 1500 bis 20.000 g/mol. Dabei sollen im Durchschnitt zwei reaktive Gruppen am Polyol vorhanden sein, beispielsweise Diole; es ist auch möglich, Verbindungen mit mehreren funktionellen Gruppen umzusetzen.

Eine Ausführungsform setzt bevorzugt niedermolekulare nicht-verzweigte Polyole ein, die ein Molekulargewicht von unterhalb von 1500 g/mol aufweisen, wobei diese Polyole 3 oder insbesondere 2 OH- Gruppen aufweisen sollen. Eine andere Ausführungsform setzt OH-haltige Polymere mit einem Molekulargewicht bis 20000 g/mol ein. Dabei können auch eine höhere Anzahl von OH-Gruppen enthalten sein.

Als Polyisocyanate können bei der Prepolymersynthese die an sich bekannten Polyisocyanate mit zwei oder mehr Isocyanat-Gruppen eingesetzt werden, wie aliphatische, cycloaliphatische oder aromatische Isocyanate. Es können im Prinzip alle bekannten Polyisocyanate eingesetzt werden, insbesondere die Isomeren des Methylendiisocyanat (MDI) oder Toluylendiisocyanats (TDI), Tetramethylxylylendiisocyanat (TMXDI), 1-Isocyanatomethyl-3-isocyanato-1,5,5-trimethylcyclohexan (IPDI), Naphthalin-1,5-diisocyanat (NDI), Hexan-1,6-diisocyanat (HDI). Es können auch mindestens trifunktionelle Isocyanate eingesetzt werden, wie durch Trimerisation oder Oligomerisation von Diisocyanaten, wie Isocyananurate, Carbodiimide oder Biurete. Bevorzugt werden Diisocyanate eingesetzt, insbesondere aromatische.

Durch die Menge der Isocyanate kann die Reaktionsführung beeinflusst werden. Wird ein hoher Überschuss an Isocyanaten eingesetzt, entstehen PU-Prepolymere, bei denen die OH-Gruppen in Isocyanatgruppen funktionalisiert worden sind. Dabei wird nur ein geringer Molekulargewichtsaufbau festgestellt. Werden geringere Mengen an Isocyanaten eingesetzt oder wird die Reaktion stufenweise durchgeführt, ist es bekannt, dass das Molekulargewicht der Prepolymere im Vergleich zu den Ausgangsverbindungen erhöht wird. Es muss sichergestellt sein, dass insgesamt ein Überschuss an Isocyanatgruppen bezogen auf die Gesamtreaktion eingesetzt wird. Die Umsetzung der Polyolverbindung mit den Isocyanaten kann auf bekannte Art und Weise erfolgen.

Für die Erfindung können die bekannten PU-Prepolymere mit reaktiven NCO-Gruppen eingesetzt werden. Solche sind dem Fachmann bekannt und können auch kommerziell erhalten werden. Insbesondere bevorzugt sind im Rahmen dieser Erfindung PU-Prepolymere, die auf Basis von Polyesterpolyolen oder Polyetherpolyolen durch Umsetzung mit Diisocyanaten hergestellt worden sind. In der Regel weisen die im Rahmen der vorliegenden Erfindung eingesetzten PU-Prepolymere ein Molekulargewicht von 500 bis etwa 30.000 g/mol auf, bevorzugt bis 15.000 g/mol, insbesondere von 1000 bis 5.000 g/mol. Dabei sind Prepolymere bevorzugt, die nur einen geringen Anteil an monomeren, nicht umgesetzten Diisocyanaten enthalten, z.B. unter 1 Gew-%.

Eine andere Ausführungsform setzt als Komponente A monomere, oligomere oder polymere Isocyanate ein. Es kann sich dabei beispielsweise um die oben erwähnten Polyisocyanate handeln oder ihre Carbodiimide, Isocyanurate oder Biurete. Es sind auch Mischungen von Prepolymeren und Polyisocyanaten möglich.

Zusätzlich zu den geeigneten NCO-Gruppen aufweisenden Bestandteilen kann die Komponente A noch weitere Hilfsstoffe und Additive enthalten. Es ist darauf zu achten, dass hierbei nur solche Bestandteile zugesetzt werden, die nicht mit den Isocyanatgruppen reagieren können. So kann eine Lagerstabilität sichergestellt werden.

Die Komponente B eines geeigneten 2-K PU-Klebstoffs muss mindestens eine Verbindung enthalten, die mindestens zwei gegenüber Isocyanatgruppen reaktive Gruppen aufweist. Beispielsweise kann es sich dabei um SH-, COOH-, NH- oder OH-Gruppen handeln. Insbesondere sind Polyole bevorzugt, wobei es sich auch um Mischungen von Polyolen unterschiedlicher chemischer Struktur oder unterschiedlichen Molekulargewichts handeln kann.

Als Polyolkomponente zum Einsatz in der Komponente B ist eine Vielzahl von Polyolen geeignet. Es kann sich beispielsweise um solche mit zwei bis zu 10 OH-Gruppen pro Molekül handeln. Es können aliphatische Verbindungen sein, es kann sich um aromatische Verbindungen handeln, es können auch Polymere eingesetzt werden, die eine ausreichende Anzahl von OH-Gruppen tragen. Es kann sich um primäre oder sekundäre OH-Gruppen handeln, soweit eine ausreichende Reaktivität mit den Isocyanatengruppen gegeben ist. Das Molekulargewicht solcher Polyole kann in weiten Grenzen variieren, beispielsweise von 500 bis 10.000 g/mol betragen. Es können die oben bereits geschriebenen Polyole enthalten sein.

Beispiele für solche Polyole sind niedermolekulare aliphatische Polyole mit bevorzugt zwei bis zehn OH-Gruppen, insbesondere C₂ bis C₃₆-Akohole. Eine andere Gruppe geeigneter Polyole sind beispielsweise Polyether. Es handelt sich dabei um die Umsetzungsprodukte von Alkylenoxiden mit 2 bis 4 C-Atomen mit niedermolekularen 2- oder 3- funktionellen Alkoholen. Dabei sollen die Polyetherpolyole ein Molekulargewicht von insbesondere 400 bis 5000 g/mol aufweisen. Auch OH-haltige Poly(meth)acrylate oder Polyolefine sind geeignet.

Eine weitere geeignete Gruppe von Polyolverbindungen zur Verwendung in der Komponente B sind Polyesterpolyole. Es können die für Klebstoffe bekannten Polyesterpolyole eingesetzt werden. Beispielsweise handelt es sich um die Umsetzungsprodukte von Diolen, insbesondere niedermolekularen Alkylendiolen oder Polyetherdiolen mit Dicarbonsäuren. Es kann sich dabei um aliphatische, aromatische Carbonsäuren oder Gemische davon handeln. Dem Fachmann sind solche Polyesterpolyole in vielen Ausgestaltungen bekannt und kommerziell verfügbar. Insbesondere sollen diese Polyesterpolyole ein Molekulargewicht insbesondere von 200 bis 3.000 g/mol aufweisen. Darunter sind auch polymere Lactone oder Polyacetale zu verstehen, soweit diese mindestens zwei funktionelle Gruppen aufweisen und ein entsprechendes geeignetes Molekulargewicht.

Die erfindungsgemäßen Polyole, die mindestens zwei reaktive Gruppen aufweisen, können einzeln oder im Gemisch eingesetzt werden. Dabei ist darauf zu achten, dass die Verbindungen miteinander mischbar sind und bei Lagerung keine Phasentrennung auftritt. Über die Auswahl der Bestandteile der Komponente B kann die Viskosität beeinflusst werden. Werden polymere Polyole eingesetzt, zeigt Komponente B eine höhere Viskosität. Bei Verwendung von Anteilen von niedermolekularen Polyolen, beispielsweise Polyalkylenpolyolen mit bis zu 12 C-Atomen, wird die Viskosität niedriger werden. Erfindungsgemäß ist es zweckmäßig, wenn die Komponente B flüssig ist. Das kann durch die Auswahl der Polyole erfolgen, in einer anderen Ausführungsform ist es jedoch möglich, dass inerte organische Lösemittel zugesetzt werden.

Aus den oben beschriebenen Bindemittelkomponenten können 2K-Kaschierklebstoffe hergestellt werden. In diesen Kaschierklebstoffen kann es zweckmäßig sein, dass zusätzliche Bestandteile enthalten sind, wie beispielsweise Lösemittel, Weichmacher, Katalysatoren, Harze, Stabilisatoren, Haftvermittler, Pigmente oder Füllstoffe.

In einer Ausführungsform enthält der erfindungsgemäß geeignete Klebstoff mindestens ein klebrigmachendes Harz. Es können grundsätzlich alle Harze eingesetzt werden, die verträglich sind und ein weitgehend homogenes Gemisch bilden.

Als gegebenenfalls einsetzbare Stabilisatoren oder Antioxidantien sind sterisch gehinderte Phenole hohen Molekulargewichts, polyfunktionelle Phenole, schwefel-und phosphorhaltige Phenole oder Amine geeignet.

Es ist möglich, dem Klebstoff zusätzlich Silanverbindungen als Haftvermittler zuzusetzen. Als Haftvermittler können die bekannten organofunktionelle Silane, wie (meth)acryloxyfunktionelle, epoxidfunktionelle, aminfunktionelle oder nicht reaktiv substituierte Silane eingesetzt werden, insbesondere sind Methoxy oder Ethoxy - Silangruppen geeignet.

Als gegebenenfalls zusätzlich vorhandenes Additiv kann ein erfindungsgemäß eingesetzter Klebstoff auch Katalysatoren enthalten. Als Katalysatoren können alle bekannten Verbindungen eingesetzt werden, die die Reaktion von OH-Gruppe und NCO-Gruppe katalysieren können. Beispiele hierfür sind Titanate, Zinncarboxylate, Zinnoxide, Organoaluminumverbindungen, tert. Aminverbindungen oder ihre Salze. Geeignete Additive sind dem Fachmann bekannt.

Andere Ausführungsformen enthalten in dem Klebstoff noch Pigmente. Es handelt sich dabei um feinteilige Pigmente, beispielsweise plättchenförmige oder Nanopartikel. Weiterhin können auch Weichmacher enthalten sein, beispielsweise Weißöle, naphtenische Mineralöle, paraffinische Kohlenwasserstofföle, Polypropylen-, Polybuten-, Polyisopren-Oligomere, hydrierte Polyisopren- und/oder Polybutadien-Oligomere, Phthalate, Adipate, Benzoatester, pflanzliche oder tierische Öle und deren Derivate. Insbesondere sind solche Weichmacher geeignet, die lebensmittelrechtlich unbedenklich sind.

Erfindungsgemäß können die Klebstoffe auch Lösemittel enthalten. Es handelt sich dabei um die üblichen Lösemittel, die bei Temperaturen bis zu 120°C verdampfen können. Die Lösemittel können ausgewählt aus der Gruppe der aliphatischen Kohlenwasserstoffe, der aromatischen Kohlenwasserstoffe, Ketone oder Ester von insbesondere C₂-C₆-Carbonsäuren. In einer anderen bevorzugten Ausführungsform ist der 2K-Klebstoff lösemittelfrei. Dabei kann insbesondere durch die Zusammensetzung der Komponente A und der Komponente B sichergestellt werden, dass bei Temperaturen bis zu 50°C eine niedrigviskose Mischung der Komponente A und B erhalten wird.

Ein erfindungsgemäß verwendeter PU-Klebstoff besteht aus einer Komponente A, die reaktive NCO-Gruppen enthält, einer Komponente B, die reaktive NH- oder insbesondere OH-Gruppen enthält. Zusätzlich können in den Komponenten A und B, 0 bis 30 % Additive und Hilfsstoffe enthalten sein. Dabei können die Additive prinzipiell in beiden Komponenten vorliegen. Es ist jedoch darauf zu achten, dass Additive, die mit NCO reaktive Gruppen aufweisen, bevorzugt in der OH-Komponente enthalten sein sollen. Anderenfalls ist die Lagerstabilität der Produkte vermindert.

Die Komponenten A und Komponenten B sind einzeln lagerstabil. Die beiden Komponenten werden zur Anwendung so gemischt, dass ungefähr ein gleiches Äquivalentverhältnis von OH-Gruppen zu NCO-Gruppen erhalten wird. Das Mischungsverhältnis der Klebstoffe ist vorgegeben. Es kann zwischen 1:10 bis 10:1 (Volumen bezogen) betragen, insbesondere von 1:2 bis 2:1.

Die einsetzbaren 2K-PU-Klebstoffe sollen bei Auftragstemperatur von ca. 20 bis 80°C eine niedrige Viskosität aufweisen. Die Viskosität der erfindungsgemäßen 2K-PU-Klebstoffe, gemessen unmittelbar nach dem Mischen der Bestandteile, soll zwischen 200 bis 10000 mPas bei Auftragstemperatur betragen, bevorzugt 500 bis 5000 mPas (bei 20 bis 60°C , Brookfield-Viskosimeter, EN ISO 2555). Eine höhere Applikationstemperatur kann möglich sein, dabei ist jedoch darauf zu achten, dass die zu verklebenden Foliensubstrate temperaturempfindlich sein können.

Die 2K-PU-Klebstoffe sollen in getrennten Vorratsbehältern, beispielsweise Kartuschen, bereitgestellt werden. Damit ist eine Lagerung, eine einfache Applikation in den Klebstoffauftragsvorrichtungen und die Herstellung von dünnen Klebstoffschichten auf den flexiblen Substraten möglich.

Gegenstand der Erfindung ist auch eine Verpackungseinheit (Kit), der den erfindungsgemäß einsetzbaren 2-K-PU-Klebstoff enthält. Diese Verpackungseinheit soll dann zur Verwendung als Kaschierklebstoff für Foliensubstrate eingesetzt werden. Eine erfindungsgemäße Verpackungseinheit besteht aus mindestens zwei getrennten Vorratsbehältern, insbesondere in Kartuschenform, wobei ein Behälter die Komponente A des Klebstoffes enthält, der zweite Behälter die Komponente B enthält. Weiterhin kann die Verpackungseinheit eine Austragsvorrichtung aufweisen, die an den Vorratsbehältern befestigt ist. Anordnung und Ausgestaltung der Vorratsbehälter sind in weiten Grenzen zu verändern. Diese Vorratsbehälter können beispielsweise als getrennte Kartuschen ausgebildet sein, die aneinander befestigt sind. Eine andere Ausführungsform wählt die Vorratsbehälter so, dass eine koaxiale Anordnung der Kartuschen ineinander ausgeführt wird. Eine weitere Ausführungsform ordnet die Vorratsbehälter nicht als zwei getrennte Kartuschen an, sondern setzt eine Kartusche ein, wobei die unterschiedlichen Behälter durch eine flexible Trennwand voneinander getrennt werden.

Die Form der Vorratsbehälter soll bevorzugt so gewählt werden, dass möglichst keine Pumpen-, Saug- oder Schlauchvorrichtungen notwendig sind. Es ist bevorzugt, wenn die Vorratsbehälter die Form einer Kartusche haben, wobei am Boden beispielsweise durch eine Druckplatte Druck auf eine bewegliche Bodenplatte ausgeübt werden kann, sodass der Inhalt einer Kartusche durch eine Austrittsöffnung an der entgegengesetzten Seite austreten kann. Dabei kann für jede Kartusche ein Stempel vorgesehen sein, es ist auch möglich, dass ein Stempel gemeinsam koaxial angeordnete Kartuschen entleert oder dass eine Kartusche mit getrennten Vorratskammern entleert wird.

Die Größe der Kartusche kann unterschiedlich sein. Sie kann zwischen 1 kg bis 60 kg betragen. Dabei können die einzelnen Vorratsbehälter unterschiedliche Größen aufweisen oder sie können eine ähnliche Größe besitzen. Die Größe der Vorratsbehälter wird beispielsweise so gewählt, dass das für den Klebstoff notwendige Mischungsverhältnis eingehalten wird. Ist beispielsweise eine 1:1 Mischung beabsichtigt, ist es vorteilhaft, gleichgroße Kartuschen vorzusehen. Werden unterschiedliche Mischungsverhältnisse benötigt, beispielsweise 2:1, so ist es zweckmäßig, zwei Kartuschen mit entsprechender Größe bereitzustellen. Es ist möglich, durch Form und Größe der Austrittsöffnung das Mischungsverhältnis vorzugeben. werden. Das Verhältnis kann aber auch durch die Geschwindigkeit der Entleerung der Kartuschen beeinflusst werden.

Ein zusätzlicher Bestandteil der Verpackungseinheit kann eine Austragsvorrichtung sein. Diese ist so ausgebildet, dass die beiden Komponenten aus den Kartuschen zusammengeführt werden. Bevorzugt soll die Austragsvorrichtung ein Mischelement aufweisen, das in der Lage ist, die beiden Komponenten miteinander zu mischen. Es kann sich dabei beispielsweise um einen statischen Mischer handeln. Dieser soll bevorzugt zum Ende der Austragsvorrichtung angeordnet sein. Aus dieser Austragsvorrichtung kann der Klebstoff zur Applikation der Kaschierklebstoffe in die Auftragsvorrichtung für die Foliensubstrate eingebracht werden.

Durch die Anpassung der zwei Kartuschen und der Austrittsvorrichtung an das für den jeweiligen Klebstoff vorgegebene Mischungsverhältnis wird sichergestellt, dass ein gleichmäßiger Verbrauch gegeben ist. Damit sollen beide Vorratsbehälter zum ungefähr gleichen Zeitpunkt entleert sein und können danach ersetzt und entsorgt werden. Da auf die Vorratsbehälter an ihrer Austrittsöffnung eine Austragsvorrichtung aufgesetzt wird, die bevorzugt einen nachgeordneten statischen Mischer aufweist, ist eine vorzeitige Vermischung der Klebstoffkomponenten bei einem möglichen Stillstand der Fördereinrichtung ausgeschlossen. Bevorzugt soll das Kit so ausgeführt werden, dass bei einem Nicht-nutzen des Klebstoffvorrats, der länger als die vorgesehene Topfzeit des 2-K-PU-Klebstoffes dauert, die Austragseinheit mit dem Mischelement leicht gegen eine neue, nicht verunreinigte Einheit ausgetauscht werden kann.

Gegenstand der Erfindung ist weiterhin ein Verfahren zum Verkleben von zwei folienförmigen Substraten. Dabei kann aus der erfindungsgemäßen Verpackungseinheit ein Klebstoff bei Bedarf bereitgestellt werden. Dieser wird im vorgegebenen Mischungsverhältnis gemischt, beispielsweise durch einen Statikmischer. Aus der Austrittsvorrichtung der Mischvorrichtung wird der Klebstoff in die Applikationsvorrichtung des Kaschierklebstoffes eingebracht. Das Auftragen des Klebstoffs auf die Folien kann mit bekannten Vorrichtungen geschehen. Diese sind dem Fachmann bekannt, es kann sich dabei um Rakelauftrag, Druckauftrag, Schlitzdüsenauftrag oder Walzenauftrag handeln. Insbesondere ist der Walzenauftrag geeignet, der beispielsweise über mehrere Walzen eine gleichmäßige und dünne Klebstoffschicht erzeugt. Diese Schicht wird danach flächig auf die Folie übertragen. Danach wird die Folie mit einer zweiten Folie, entweder einer anderen Kunststofffolie, Mehrschichtfolie, einer metallisierten Folie oder einem Papier- oder Kartonsubstrat zusammengeführt und unter Druck verklebt.

Es kann zweckmäßig sein, die Kartuschen oder diese Walzen zu erwärmen. Damit kann eine niedrige Viskosität des 2K-PU-Klebstoffes unter Applikationsbedingungen eingestellt werden. Übliche Anwendungstemperaturen für erfindungsgemäß zu verwendende 2-K-PU-Klebstoffe liegen zwischen 20 bis 80°C, insbesondere bis 60°C.

Nach dem erfindungsgemäßen Verfahren wird ein geeigneter Klebstoff als Schicht auf ein Substrat aufgetragen. Der Klebstoff soll in einer Schichtstärke von 1 g/m² bis 100 g/m² aufgetragen werden, bevorzugt von 1 bis 30 g/m² insbesondere unter 20 g/m²_{.}

Durch die erfindungsgemäße Verwendung der in Kartuschen bereitgestellten Klebstoffkomponenten ist eine vorteilhafte Anwendung von solchen Kaschierklebstoffen möglich. Durch vorgegebene Größe und Form der beiden Kartuschen und gegebenenfalls zusammen mit der Austragsvorrichtung kann sichergestellt werden, dass keine Mischungsfehler bei dem 2K-PU-Klebstoff auftreten. Weiterhin ist es möglich, einfache Austragsvorrichtungen aus den Vorratsbehältern einzusetzen. Eine Verschmutzung der Fördervorrichtung, beispielsweise von Pumpen oder Rohrleitungen, wird bei der erfindungsgemäßen Arbeitsweise vermieden. Ein Wechsel auf andere Klebstoffe, die ein anderes Anwendungsprofil aufweisen, ist möglich. Durch die Bereitstellung von statischen Mischelementen, die insbesondere als Einwegelemente ausgebildet sein können, wird auch bei Produktionsunterbrechungen eine Verstopfung der Fördereinrichtung durch bereits gemischten, aber nicht aufgetragenen Klebstoff verhindert.

Durch die Verwendung an sich bekannter 2-K-PU-Klebstoffe in Form von Kartuschen, insbesondere in Form einer abgestimmten Verpackungseinheit der Klebstoff-komponenten, wird eine wesentliche Vereinfachung der Beschichtung von Foliensubstraten ermöglicht.

## Patentansprüche

1. Verwendung von 2K-Polyurethan- Klebstoffen als Kaschierklebstoff zum flächigen Verkleben von flexiblen Foliensubstraten zu Mehrschichtfolien mit einer Applikationsvorrichtung für Kaschierklebstoffe ausgestaltet zum Rakelauftrag, Druckauftrag, Schlitzdüsenauftrag oder Walzenauftrag, wobei der Klebstoff in getrennten Vorratsbehältern als Kartuschen verpackt bereitgestellt wird, wobei die Kartuschen ausgebildet sind mit einer beweglichen Bodenplatte und einer Austrittsöffnung an der entgegengesetzten Seite.

2. Verwendung nach Anspruch 1, **dadurch gekennzeichnet, dass** der 2K-PU-Klebstoff eine Viskosität bei 20 bis 60°C zwischen 200 bis 10000 mPas (EN ISO 2555) aufweist.

3. Verwendung nach Anspruch 1 oder 2, **dadurch gekennzeichnet, dass** der 2K-PU-Klebstoff in eine Menge von 1 bis 100 g/m² aufgetragen wird.

4. Verwendung nach Anspruch 1 bis 3, **dadurch gekennzeichnet, dass** das Mischungsverhältnis der Komponenten des Klebstoffs zwischen 1:10 bis 10:1 beträgt.

5. Verwendung nach Anspruch 4, **dadurch gekennzeichnet, dass** das Mischungsverhältnis durch die Gestaltung der Austragsvorrichtung, durch die Gestaltung der Kartuschen und/oder durch die Entleerungsgeschwindigkeit der Kartuschen gesteuert wird.

6. Verwendung nach Anspruch 1 bis 5, **dadurch gekennzeichnet, dass** der Klebstoff lösemittelfrei ist.

7. Verwendung nach Anspruch 1 bis 6, **dadurch gekennzeichnet, dass** als Substrat thermoplastische Kunststofffolien, mit Kunststofffolien, Papier, Karton und/oder Metallfolien verklebt werden.

8. Verwendung nach Anspruch 1, wobei die Komponenten des reaktiven 2K-PU-Klebstoffs als Verpackungseinheit in zwei getrennten Behältern in Kartuschenform bereitgestellt werden, und die Komponenten über eine Austragsvorrichtung in einem vorgegebenen Mischungsverhältnis gemischt werden können, als Kaschierklebstoff zum flächigen Verkleben von Mehrschichtfolien.

9. Verwendung nach Anspruch 8, **dadurch gekennzeichnet, dass** die Kartuschen aus Metall, Kunststoff oder beschichtetem Karton ausgeführt sind.

10. Verwendung nach Anspruch 8 oder 9, **dadurch gekennzeichnet, dass** die Verpackungseinheit ein Einweggebinde ist.

11. Verfahren zum Verkleben von Foliensubstraten, **dadurch gekennzeichnet, dass** ein 2K-PU-Klebstoff in Kartuschenform bereitgestellt wird, wobei die Kartuschen ausgebildet sind mit einer beweglichen Bodenplatte und einer Austrittsöffnung an der entgegengesetzten Seite, und über eine Austragsvorrichtung mit einem Mischelement auf eine Klebstoffauftragsvorrichtung für Foliensubstrate eingebracht und über eine Walze flächig auf das Substrat aufgetragen wird.

12. Verfahren zum Verkleben von Foliensubstraten nach Anspruch 11, **dadurch gekennzeichnet, dass** das Austragselement mit einem Mischelement austauschbar angebracht ist.

13. Verfahren zum Verkleben von Foliensubstraten nach Anspruch 11 oder 12,
**dadurch gekennzeichnet, dass** der Klebstoff bei einer Temperatur zwischen 20 und 80 °C aufgetragen wird.

## Claims

1. Use of two-component polyurethane adhesives as a laminating adhesive for the full-surface adhesive bonding of flexible film substrates to form multilayer films, with an application device for laminating adhesives developed for knife application, print application, flat film die application or roller application, the adhesive being provided packed into separate storage containers as cartridges, the cartridges being designed with a moving base plate and an outlet on the opposite side.

2. The use according to claim 1, **characterised in that** the two-component PU adhesive has a viscosity at 20 to 60°C of between 200 and 10,000 mPas (EN ISO 2555).

3. The use according to claim 1 or 2, **characterised in that** the two-component PU adhesive is applied in an amount from 1 to 100 g/m².

4. The use according to claim 1 to 3, **characterised in that** the mixing ratio of the components of the adhesive is between 1:10 and 10:1.

5. The use according to claim 4, **characterised in that** the mixing ratio is governed by the configuration of the discharge device, by the configuration of the cartridges and/or by the discharge rate of the cartridges.

6. The use according to claim 1 to 5, **characterised in** the adhesive is free from solvents.

7. The use according to claim 1 to 6, **characterised in that** thermoplastic films as the substrate are adhesively bonded with plastic films, paper, board and/or metal foils.

8. The use according to claim 1, wherein the components of the reactive two-component PU adhesive are provided as a packaging unit in two separate containers in cartridge form, and the components can be mixed together by means of a discharge device in a predefined mixing ratio as a laminating adhesive for full-surface adhesive bonding of multilayer films.

9. The use according to claim 8, **characterised in that** the cartridges are made from metal, plastic or coated board.

10. The use according to claim 8 or 9, **characterised in that** the packaging unit is a disposable container.

11. A method for adhesively bonding film substrates, **characterised in that** a two-component PU adhesive is provided in cartridge form, the cartridges being designed with a moving base plate and an outlet on the opposite side, and is introduced by means of a discharge device having a mixing element into an adhesive application device for film substrates and is applied to the entire surface of the substate using a roller.

12. The method for adhesively bonding film substrates according to claim 11, **characterised in that** the discharge element having a mixing element is interchangeably mounted.

13. The method for adhesively bonding film substrates according to claim 11 or 12, **characterised in that** the adhesive is applied at a temperature of between 20 and 80°C.

## Revendications

1. Utilisation d'adhésifs de polyuréthane à deux composants à titre d'adhésif de contrecollage pour le collage surfacique de substrats flexibles en feuilles pour l'obtention de feuilles multicouches avec un dispositif d'application pour des adhésifs de contrecollage équipé pour une application à la racle, une application sous pression, une application à l'aide d'une filière plate ou une application au rouleau, l'adhésif étant fourni à l'état conditionné dans des récipients d'alimentation séparés sous la forme de cartouches, les cartouches étant réalisées avec une plaque de base mobile et une ouverture d'évacuation du côté opposé.

2. Utilisation selon la revendication 1, **caractérisée en ce que** l'adhésif de polyuréthane à deux composants présente une viscosité à une température de 20 à 60 °C entre 200 et 10 000 mPas (norme EN ISO 2555).

3. Utilisation selon la revendication 1 ou 2, **caractérisée en ce que** l'adhésif de polyuréthane à deux composants est appliqué en une quantité de 1 à 100 g/m².

4. Utilisation selon les revendications 1 à 3, **caractérisée en ce que** le rapport de mélange des composants de l'adhésif s'élève de 1:10 à 10:1.

5. Utilisation selon la revendication 4, **caractérisée en ce que** le rapport de mélange est réglé par la configuration du dispositif d'évacuation, par la configuration des cartouches et/ou par la vitesse de vidage des cartouches.

6. Utilisation selon les revendications 1 à 5, **caractérisée en ce que** l'adhésif est exempt de solvant.

7. Utilisation selon les revendications 1 à 6, **caractérisée en ce qu'**on colle, à titre de substrat, des feuilles en matière synthétique thermoplastique avec des feuilles en matière synthétique, du papier, du carton et/ou des feuilles métalliques.

8. Utilisation selon la revendication 1, dans laquelle les composants de l'adhésif réactif en polyuréthane à deux composants est fourni sous la forme d'une unité de conditionnement dans deux récipients séparés en forme de cartouches, et les composants peuvent être mélangés via un dispositif d'évacuation dans un rapport de mélange prédéfini, à titre d'adhésif de contrecollage pour le collage surfacique de feuilles multicouches.

9. Utilisation selon la revendication 8, **caractérisée en ce que** les cartouches sont réalisées en métal, en matière synthétique ou en cartoon couché.

10. Utilisation selon la revendication 8 ou 9, **caractérisée en ce que** l'unité de conditionnement est un récipient à jeter.

11. Procédé pour le collage de substrats en feuilles, **caractérisé en ce qu'**on procure un adhésif en polyuréthane à deux composants sous forme de cartouche, les cartouches étant réalisées avec une plaque de base mobile et une ouverture d'évacuation du côté opposé, et étant introduit via un dispositif d'évacuation comportant un élément de mélange sur un dispositif d'application d'adhésif pour des substrats en feuilles et étant appliqué via un rouleau sur toute la surface du substrat.

12. Procédé pour le collage de substrats en feuilles selon la revendication 11, **caractérisé en ce que** l'élément d'évacuation comportant un élément de mélange est monté de manière à pouvoir être échangé.

13. Procédé pour le collage de substrats en feuilles selon la revendication 11 ou 12, **caractérisé en ce que** l'adhésif est appliqué à une température entre 20 et 80 °C.
